# EUROPEAN PATENT SPECIFICATION

(11) **EP 1 886 512 B1**
(45) Date of publication and mention of the grant of the patent: **16.08.2017**
(21) Application number: 06768745.9
(22) Date of filing: 02.06.2006
(51) Int. Cl.: H04L 29/06, H04W 84/08, H04W 4/10

(54) **SYSTEM AND METHOD FOR POC SESSION SUBSTITUTION**
SYSTEM UND VERFAHREN ZUR SUBSTITUTION EINER POC-SITZUNG
SYSTEME ET PROCEDE DE SUBSTITUTION DE SESSION POC

(30) Priority: 02.06.2005 IN CH06752005; 01.06.2006 KR 20060049580
(43) Date of publication of application: 13.02.2008
(73) Proprietor: Samsung Electronics Co., Ltd., Suwon-si, Gyeonggi-do, 443-742 (KR)
(72) Inventor: SESHADRI, Thirumalai E., Samsung Electronics Co.,Ltd, Gyeoggi-do (KR); JEEDIGUNTA, Venkateswar, Samsung Electronics Co.,Ltd, Gyeoggi-do (KR); PARK, Sung-Jin, Samsung Electronics Co.,Ltd, Gyeoggi-do (KR); SUNG, Sang-Kyung, Samsung Electronics Co.,Ltd, Gyeoggi-do (KR)
(74) Representative: Grünecker Patent- und Rechtsanwälte PartG mbB
(86) International application number: PCT/KR2006/002131
(87) International publication number: WO 2006/129984

(56) References cited:
- WO-A1-2006/009367
- US-A- 6 058 307
- US-A1- 2003 016 632
- US-A1- 2004 120 474
- "Push to talk over Cellular (PoC) - Architecture ; OMA-AD-PoC-V1_0-20050428-C", OMA-AD-POC-V1_0-20050428-C, OPEN MOBILE ALLIANCE (OMA), 4330 LA JOLLA VILLAGE DR., SUITE 110 SAN DIEGO, CA 92122 ; USA, no. 1.0, 28 April 2005 (2005-04-28), pages 1-156, XP064119383, [retrieved on 2005-05-02]
- KANG SUK HUH ET AL: "Inconsistency in Simultaneous Session ; OMA-POC-2005-0438-Inconsistency in Simultaneous Session", OMA-POC-2005-0438-INCONSISTENCY IN SIMULTANEOUS SESSION, OPEN MOBILE ALLIANCE (OMA), 4330 LA JOLLA VILLAGE DR., SUITE 110 SAN DIEGO, CA 92122 ; USA , 29 April 2005 (2005-04-29), pages 1-12, XP064052111, Retrieved from the Internet: URL:ftp/Public_documents/COM/COM-POC/2005/ [retrieved on 2005-04-29]
- ANDREW ALLEN ET AL: "Answer Mode Indication ; OMA-POC-2004-0304R01-AD-Answer-Mode", OMA-POC-2004-0304R01-AD-ANSWER-MODE, OPEN MOBILE ALLIANCE (OMA), 4330 LA JOLLA VILLAGE DR., SUITE 110 SAN DIEGO, CA 92122 ; USA , 13 June 2004 (2004-06-13), pages 1-17, XP064050366, Retrieved from the Internet: URL:ftp/Public_documents/COM/COM-POC/2004/ [retrieved on 2004-06-13]

## Description

### Technical Field

The present invention relates to a technology for supporting a simultaneous session handling procedures in a PoC (Push to Talk Over Cellular) system.

### Background Art

A PoC System makes use of the infrastructure provided by SIP technology for session establishment, session management and session termination. While providing multiple sessions, it is understandable the number of simultaneous sessions cannot be indefinite considering the limited resources available.

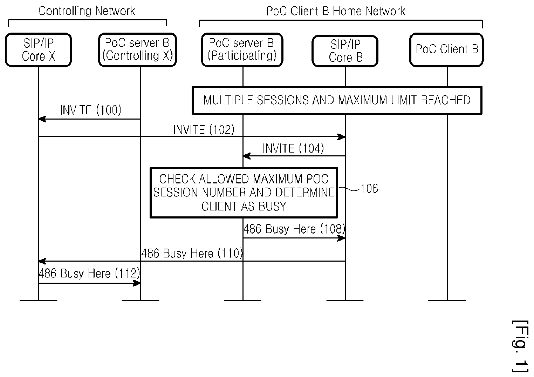

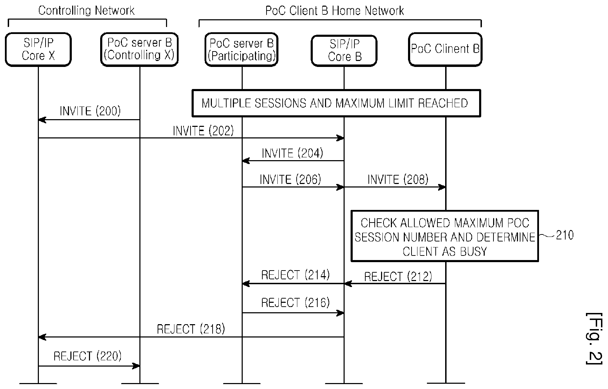

In the PoC system, multiple sessions are managed in a PoC server or in a PoC client. These two cases will be described with reference to FIGs. 1 and 2.

With reference to FIG. 1, a description will first be made of a PoC simultaneous session scenario at a PoC server. FIG. 1 illustrates a scenario describing a server behavior when the number of simultaneous PoC sessions has exceeded the limit.

In FIG. 1, it is assumed that User A wants to invite User B for joining a PoC session, User B has involved in multiple PoC Sessions, he has reached the maximum limit that has been supported, and the PF of User B supports the simultaneous sessions. Hereinbelow, the terms PoC user and PoC client will be used interchangeably in the same sense.

Referring to FIG. 1, when User A wants to invite User B to join a PoC conversation, he sends an INVITE message addressing User B. A controlling PoC Function (hereinafter, referred to as CF) B routes the INVITE message to a participating function via an SIP signaling procedure in steps 100 to 104. PF B receives the INVITE message, and checks whether User B has reached his maximum limit for the simultaneous sessions in step 106. If User B has already reached the maximum limit of the simultaneous PoC sessions, PF B replies to the INVITE message with a '486 Busy' message in steps 108 to 112. PF B keeps on replying with the busy state notification till User B has released at least one of the existing PoC sessions.

As described above, when User A invites User B to join a PoC session in the PoC simultaneous session scenario at the PoC server, Participating PoC Function (hereinafter, referred to as PF) B determines the availability of User B before routing the invitation request. If PF B recognizes that User B is "participating in the maximum number of simultaneous sessions", it sends the 486 Busy message to CP B. Then CF B determines User B as busy and responds back to User A automatically.

With reference to FIG. 2, a PoC simultaneous session scenario at a PoC client will be described. FIG. 2 illustrates a scenario describing a client behavior when the number of simultaneous PoC sessions has exceeded the limit.

Referring to FIG. 2, it is assumed that User A wants to invite User B for joining a PoC session, User B has involved in multiple PoC Sessions, he has reached the maximum limit that has been supported, and the PF of User B supports the simultaneous sessions, as with FIG. 1.

When User A wants to invite User B to join a PoC conversation, he sends an INVITE message addressing User B. Controlling PoC Function (hereinafter, referred to as CF) B routes the INVITE message to the PF via an SIP signaling procedure in steps 200 to 204. PF B routes the INVITE message to User B in steps 206 and 208. PoC client B checks the allowed maximum number of PoC sessions in step 201. If User B has already reached the maximum limit of the simultaneous PoC sessions, PoC client B replies to the INVITE message with a "REJECT" message in steps 201 to 220. PoC client B keeps on replying with the busy state notification till User B has released at least one of the existing PoC sessions.

As described above, when User A invites User B to join a PoC session in the PoC simultaneous session scenario at the PoC client, the PF routes the INVITE message to User B. Then if the requesting PF client recognizes that User B is "too busy for the simultaneous session", the PF responds back to User A automatically. Alternatively, the PF responds to User A that User B is busy, directly without routing the INVITE message to User B.

The documents US 2003/016632 A1, XP064119383, XP064052111 and XP064052111 represent relevant prior background art.

### Disclosure of Invention

### Technical Problem

As described above, if a PoC client participating in multiple sessions is requested to join a session, a PoC server determines the PoC client as busy if the PoC client has reaches the maximum limit of simultaneous sessions that can be joined at one time. Then the PoC server notifies the inviting user that the recipient user cannot join.

The invited session may be more important than the existing session for the PoC client. In this case, if the user are participating the maximum number of sessions, the PoC server may decide that the PoC client is busy without giving any right to select the session to the PoC client. Due to this limit of the session selection right, the PoC user may miss the more important invited PoC session.

### Technical Solution

Accordingly, the present invention provides a system and method according to the appended independent claims 1 and 8 for PoC session substitution in order to provide more flexibility to an end user during participating in multiple sessions through an improved session management mechanism.

The present invention provides a system and method for substituting an incoming PoC session for one of existing PoC sessions so that the limit for simultaneous sessions is met.

The present invention provides a PoC session substitution system and method for determining whether to accept or reject an incoming PoC session invitation by a user in a simultaneous session situation where the number of PoC sessions involved at a time exceeds a maximum limit.

The present invention provides a PoC session substitution system and method for managing simultaneous sessions when the number of the simultaneous sessions exceeds a maximum limit.

The present invention provides a PoC session substitution system and method for managing multiple sessions by updating in a PoC service environment.

The present invention provides a PoC session substitution system and method for routing an INVITE message by a server in a PoC service environment.

The present invention provides a system and method for maintaining a timer in a PoC server when the PoC server receives an invitation acceptance before release of an existing session.

The present invention provides a system and method for substituting a PoC session by a client upon receipt of a new invite request.

To achieve the above objects, in a PoC session substitution system, upon receipt of a session invitation request to a PoC client, a PoC server checks a multiple session management setting in a PoC service environment set by the PoC client, and routes the session invitation request to the PoC client if the multiple session management setting is set to manual. Upon receipt of the session invitation request, the PoC client determines whether the PoC client is participating in all available sessions, notifies a user that the number of sessions participated has reached a maximum limit, if all available sessions are used, and selects of at least one of an invited session and an existing session.

To achieve the above objects, in a method of managing multiple sessions which a PoC client is participating in, when an invitation request to a new session is received for the PoC client, a PoC server checks a multiple session management setting in a PoC client-set PoC service environment, and routes the session invitation request to the PoC client by the PoC server, if the multiple session management setting is set to manual. The PoC client determines whether the PoC client is participating in all available sessions, upon receipt of the session invitation request by the PoC client, notifies a user that the number of sessions participated has reached a maximum limit by the PoC client, if all available sessions are used, and selects at least one of an invited session and an existing session.

### Advantageous Effects

As described above, the present invention advantageously enables a user to determine whether to accept or reject an incoming PoC session invitation when the invitation request arrives at a client participating in multiple sessions the number of which exceeds an allowed maximum limit.

### Brief Description of the Drawings

FIG. 1 illustrates a scenario describing a server behavior when the number of simultaneous PoC sessions has exceeded the limit;
FIG. 2 illustrates a scenario describing a client behavior when the number of simultaneous PoC sessions has exceeded the limit;
FIG. 3 illustrates a scenario describing a behavior proposed when the number of simultaneous PoC sessions has exceeded the limit according to an embodiment of the present invention; and
FIGs. 4 and 5 illustrate a schema for PoC service environment setting to manage multiple sessions according to an embodiment of the present invention.

### Best Mode for Carrying Out the Invention

When a PoC client participating in multiple sessions receives an invitation request, its user checks an invited session and has to set a PoC service environment in order to release one of an existing session or the last requested session.

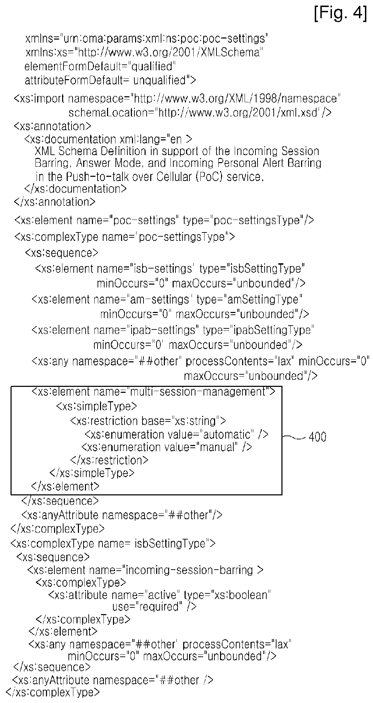

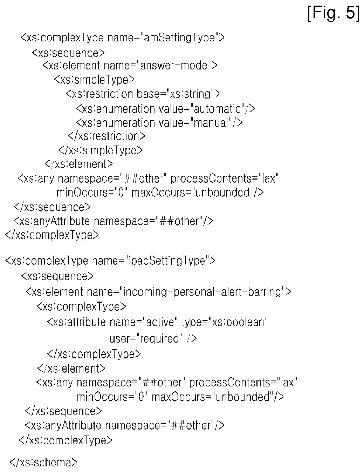

Referring to FIGs. 4 and 5 illustrating a schema for PoC service environment setting to manage multiple sessions, the PoC user may specify his preference via PoC service settings using XML in a box 400, whether he would like to receive an incoming invitation, once the maximum limit has reached. A multiple session management value can be set to "automatic" or "manual". If the multiple session management value is set to automatic, a server itself rejects the invitation and interprets a terminating PoC client as "Busy". This is considered as a default value. If the multiple session management value is set to manual, the server routes the INVITE message to the PoC client and manages the PoC sessions in the manner that maintains the maximum simultaneous session limit.

According to the multiple session management setting, the server decides whether it has to reject or route the INVITE message to the user. When the invited client is participating in the maximum number of sessions, the server checks the service environment. This can be achieved through an existing PoC setting publish procedure.

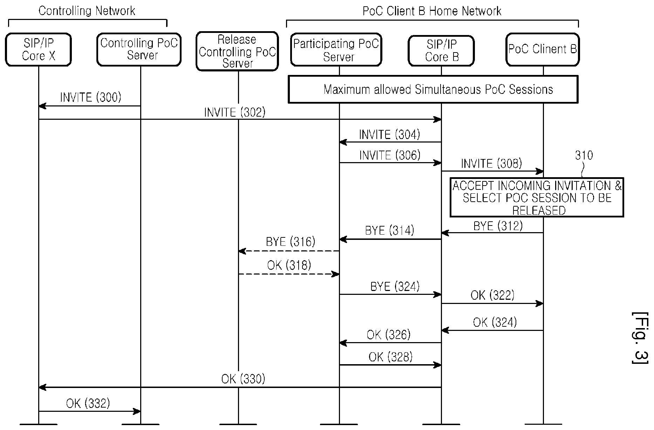

With reference to FIG. 3, a description will be made of a signal flow and operation between a PoC server and a PoC client participating in multiple sessions, upon receipt of an invitation request for the PoC client in the case where a PoC service environment has been set for multiple session management. FIG. 3 illustrates a scenario describing a behavior proposed when the number of simultaneous PoC sessions has exceeded the limit according to an embodiment of the present invention.

The PoC client has the provision to specify service settings related to multiple session management, when it supports multiple sessions. The PoC server has the provision to update the service settings related to multiple session management, when it supports multiple sessions.

Upon receipt of an INVITE message in steps 300 to 304, it determines whether a multiple session management value is set to automatic or manual. If it is set to automatic, the PoC server itself rejects the invitation, determines a terminating PoC client as busy, and notifies the requesting client of the fact by a 'Busy' message.

If the multiple session management value is set to manual, the PoC server routes the INVITE message to PoC Client B in steps 306 and 308.

In step 310, PoC client B checks its allowed maximum number of PoC sessions and notifies its user of the incoming session invitation request. In the case where the number of PoC sessions has reached the maximum limit, upon receipt of a user request for participating in the new session instead of an existing PoC session, PoC Client B notifies the participating PoC server that one of the existing PoC sessions will be released by sending a BYE message in steps 312 and 314. When needed, one or more PoC sessions may be released. The BYE message contains the ID of a PoC session to be released. The ID can be a conference URI, SIP URI, or an index as far as it identifies the PoC session. The participating PoC server notifies a corresponding controlling PoC server of release of the PoC session using the PoC session ID by sending the BYE message. A controlling PoC server which has not received the BYE message maintains the PoC session, while the controlling PoC server receiving the BYE message notifies PoC Client B of release of the PoC session by an OK message in steps 318 to 322. Then PoC Client B sends the OK message to the controlling PoC server that has sent the INVITE message, notifying that it has joined the session in step 324 to 332.

The participating PoC server may invoke a timer to receive a time to receive the BYE message. If the BYE message is not received before the timer expiry, the PoC server determines that the invited PoC Client B will not participate in the session and sends a Busy message to the requesting client. For an incoming message after the time expiry, the PoC server sends a message indicating the time expiry (e.g. Not acceptable).

If the PoC service environment for multiple session management is not set, the procedure is affected according to the answer mode of the PoC client. If the answer mode is a manual answer mode, the multiple session management is carried out as if the multiple session management value were set to manual. If the answer mode is an auto answer mode, the PoC server sends an INVITE message commanding negligence of auto answer setting of PoC Client B to PoC Client B in step 306 and 308. The subsequence procedure is performed in the same manner as described before.

While the invention has been shown and described with reference to certain preferred embodiments thereof, it will be understood by those skilled in the art that various changes in form and details may be made therein without departing from the scope of the invention as defined by the appended claims.

## Claims

1. A system for PoC session substitution, comprising:
a PoC server configured for, upon receipt of a session invitation request to a PoC client,
checking a multiple session management setting in a PoC service environment set by the PoC client, and routing the session invitation request to the PoC client if the multiple session management setting is set to manual; and
the PoC client configured for upon receipt of the session invitation request, determining whether the PoC client is participating in all available sessions, notifying a user that the number of sessions participated has reached a maximum limit, if all available sessions are used, and selecting at least one of the invited session and an existing session.

2. The system of claim 1, wherein if the multiple session management setting is set to automatic, the PoC server is configured for determining that the PoC client is busy and sending a reject message for the invitation request to the client which has sent the session invitation request.

3. The system of claim 1, wherein if the user selects at least one of the invited session and the existing session, the PoC client is configured for sending a message for releasing the selected session to the PoC server.

4. The system of claim 2, wherein upon receipt of a request for accepting the session invitation request from the user, the PoC client is configured for sending a response message indicating acceptance of the session invitation request to the PoC server.

5. The system of claim 3, wherein upon receipt of the message for releasing the selected session, the PoC server is configured for checking the session to be released included in the message and releasing the session.

6. The system of claim 4, wherein upon receipt of the response message indicating acceptance of the session invitation request, the PoC server is configured for establishing the invited session.

7. The system of claim 1, wherein if the multiple session management setting is set to manual, the PoC server is configured for invoking a timer for receiving the message for releasing a session from the PoC client, after routing the session invitation request to the PoC client, determining that the PoC client is busy if the message for the session release is not received form the PoC client before the timer expires, and sending a reject message to the client which has sent the session invitation request.

8. A method of managing multiple sessions which a PoC client is participating in, when an invitation request to a new session is received for the PoC client, comprising the steps of:
checking a multiple session management setting in a PoC client-set PoC service environment by a PoC server, upon receipt of the session invitation request to the PoC client, and routing the session invitation request to the PoC client by the PoC server, if the multiple session management setting is set to manual; and
determining whether the PoC client is participating in all available sessions, upon receipt of the session invitation request by the PoC client, notifying a user that the number of sessions participated has reached a maximum limit by the PoC client, if all available sessions are used, and selecting at least one of an invited session and an existing session by the PoC client.

9. The method of claim 8, further comprising the step of, if the multiple session management setting is set to automatic, determining that the PoC client is busy and sends a reject message for the invitation request to the a client which has sent the session invitation request by the PoC server.

10. The method of claim 8, further comprising the step of, if the user selects at least one of the invited session and the existing session, sending a message for releasing the selected session to the PoC server by the PoC client.

11. The method of claim 9, further comprising the step of, upon receipt of a request for accepting the session invitation request from the user, sending a response message indicating acceptance of the session invitation request to the PoC server by the PoC client.

12. The method of claim 10, further comprising the step of, upon receipt of the message for releasing the selected session, checking the session to be released in the message and releasing the session by the PoC server.

13. The method of claim 11, further comprising the step of, upon receipt of the response message indicating acceptance of the session invitation request, establishing the invited session by the PoC server.

14. The method of claim 8, further comprising the step of, if the multiple session management setting is set to manual, invoking a timer for receiving a message for releasing a session from the PoC client after routing the session invitation request to the PoC client, determining that the PoC client is busy if the message for the session release is not received form the PoC client before the timer expires, and sending a reject message to the client which has sent the session invitation request by the PoC server.

## Patentansprüche

1. System zur Substitution einer PoC-Sitzung, umfassend:
einen PoC-Server, konfiguriert zur,
beim Empfang einer Sitzungseinladungsanforderung an einen PoC-Clienten, Überprüfung einer Mehrfachsitzungs-Verwaltungseinstellung in einer PoC-Dienstumgebung, eingestellt durch den PoC-Clienten, und Routen der Sitzungseinladungsanforderung an den PoC-Clienten, wenn die Mehrfachsitzungs-Verwaltungseinstellung auf manuell eingestellt wird; und
den PoC-Clienten, konfiguriert zum,
beim Empfang der Sitzungseinladungsanforderung, Feststellen, ob der PoC-Client an allen verfügbaren Sitzungen teilnimmt, Benachrichtigung eines Benutzers, dass die Anzahl an teilgenommen Sitzungen eine maximale Grenze erreicht hat, wenn alle verfügbaren Sitzungen verwendet werden, und Auswahl der eingeladenen Sitzung und/oder einer existierenden Sitzung.

2. System nach Anspruch 1, wobei, wenn die Mehrfachsitzungs-Verwaltungseinstellung auf automatisch eingestellt wird, der PoC-Server konfiguriert ist, um festzustellen, dass der PoC-Client belegt ist und eine Zurückweisungsnachricht für die Einladungsanforderung an den Clienten zu senden, der die Sitzungseinladungsanforderung geschickt hat.

3. System nach Anspruch 1, wobei, wenn der Benutzer die eingeladene Sitzung und/oder die existierende Sitzung auswählt, der PoC-Client konfiguriert ist, eine Nachricht zur Freigabe der ausgewählten Sitzung an den PoC-Server zu senden.

4. System nach Anspruch 2, wobei beim Empfang einer Anforderung zur Akzeptierung der Sitzungseinladungsanforderung von dem Benutzer, der PoC-Client konfiguriert ist, eine Antwortnachricht an den PoC-Server zu senden, die die Akzeptanz der Sitzungseinladungsanforderung anzeigt.

5. System nach Anspruch 3, wobei beim Empfang der Nachricht zur Freigabe der ausgewählten Sitzung, der PoC-Server konfiguriert ist, die freizugebende, in der Nachricht eingeschlossene Sitzung zu überprüfen und die Sitzung freizugeben.

6. System nach Anspruch 4, wobei beim Empfang der Antwortnachricht, die die Akzeptanz der Sitzungseinladungsanforderung anzeigt, der PoC-Server konfiguriert ist, die eingeladene Sitzung einzurichten.

7. System nach Anspruch 1, wobei, wenn die Mehrfachsitzungs-Verwaltungseinstellung auf manuell eingestellt wird, der PoC-Server konfiguriert ist, einen Zeitgeber zum Empfangen der Nachricht zur Freigabe einer Sitzung von dem PoC-Clienten aufzurufen, nach dem Routen der Sitzungseinladungsanforderung an den PoC-Clienten festzustellen, dass der PoC-Client belegt ist, wenn die Nachricht für die Sitzungsfreigabe von dem PoC-Clienten nicht empfangen wird, bevor der Zeitgeber abläuft, und eine Zurückweisungsnachricht an den Clienten zu senden, der die Sitzungseinladungsanforderung geschickt hat.

8. Verfahren zur Verwaltung von Mehrfachsitzungen, an denen ein PoC-Client teilnimmt, wenn eine Einladungsanforderung zu einer neuen Sitzung für den PoC-Clienten empfangen wird, das die nachstehenden Schritte umfasst:
Überprüfen einer Mehrfachsitzung-Verwaltungseinstellung in einer PoC-Clienteneingestellten PoC-Dienstumgebung durch einen PoC-Server, beim Empfang der Sitzungseinladungsanforderung an den PoC-Clienten, und Routen der Sitzungseinladungsanforderung an den PoC-Clienten durch den PoC-Server, wenn die Mehrfachsitzungs-Verwaltungseinstellung auf manuell eingestellt wird; und
Feststellen, ob der PoC-Client an allen verfügbaren Sitzungen teilnimmt, beim Empfang der Sitzungseinladungsanforderung durch den PoC-Clienten, Benachrichtigung eines Benutzers, dass die Anzahl an teilgenommenen Sitzungen eine maximale Grenze erreicht hat, durch den PoC-Clienten, wenn alle verfügbaren Sitzungen verwendet werden, und Auswählen einer eingeladenen Sitzung und/oder einer existierenden Sitzung durch den PoC-Clienten.

9. Verfahren nach Anspruch 8, das des Weiteren den Schritt der, wenn die Mehrfachsitzungs-Verwaltungseinstellung auf automatisch eingestellt wird, Feststellung umfasst, dass der PoC-Client belegt ist und eine Zurückweisungsnachricht für die Einladungsanforderung an den Clienten, der die Sitzungseinladungsanforderung geschickt hat, durch den PoC-Server sendet.

10. Verfahren nach Anspruch 8, das des Weiteren den Schritt des, wenn der Benutzer die eingeladene Sitzung und/oder die existierende Sitzung auswählt, Sendens einer Nachricht zur Freigabe der ausgewählten Sitzung an den PoC-Server durch den PoC-Clienten umfasst.

11. Verfahren nach Anspruch 9, das des Weiteren den Schritt des, beim Empfang einer Anforderung zum Akzeptieren der Sitzungseinladungsanforderung von dem Benutzter, Sendens einer Antwortnachricht, die die Akzeptanz der Sitzungseinladungsanforderung anzeigt, an den PoC-Server durch den PoC-Clienten umfasst.

12. Verfahren nach Anspruch 10, das des Weiteren den Schritt des, beim Empfang der Nachricht zur Freigabe der ausgewählten Sitzung, Überprüfens der freizugebenden Sitzung in der Nachricht und der Freigabe der Sitzung durch den PoC-Server umfasst.

13. Verfahren nach Anspruch 11, das des Weiteren den Schritt des, beim Empfang der Antwortnachricht, die die Akzeptanz der Sitzungseinladungsanforderung anzeigt, Einrichtens der eingeladenen Sitzung durch den PoC-Server umfasst.

14. Verfahren nach Anspruch 8, das des Weiteren den Schritt des, wenn die Mehrfachsitzungs-Verwaltungseinstellung auf manuell eingestellt wird, Aufrufens eines Zeitgebers zum Empfang einer Nachricht zur Freigabe einer Sitzung von dem PoC-Clienten nach dem Routen der Sitzungseinladungsanforderung an den PoC-Clienten, das Feststellen, dass der PoC-Client belegt ist, wenn die Nachricht für die Sitzungsfreigabe von dem PoC-Clienten nicht empfangen wird, bevor der Zeitgeber abläuft, und das Senden einer Zurückweisungsnachricht an den Clienten, der die Sitzungseinladungsanforderung geschickt hat, durch den PoC-Server umfasst.

## Revendications

1. Système pour la substitution de session PoC, comprenant :
un serveur PoC conçu pour, lors de la réception d'une demande d'invitation de session destinée à un client PoC, vérifier un paramètre de gestion de sessions multiples d'un environnement de service PoC établi par le client PoC, et acheminer la demande d'invitation de session au client PoC si le paramètre de gestion de sessions multiples est réglé sur manuel ; et
le client PoC conçu pour, lors de la réception de la demande d'invitation de session, déterminer si le client PoC est en train de participer à toutes les sessions disponibles, avertir un utilisateur que le nombre de sessions auxquelles il y a participation a atteint une limite maximale, si toutes les sessions disponibles sont utilisées, et sélectionner au moins une session parmi la session invitée et la session existante.

2. Système selon la revendication 1, dans lequel, si le paramètre de gestion de sessions multiples est réglé sur automatique, le serveur PoC est conçu pour déterminé que le client PoC est occupé et envoie un message de rejet pour la demande d'invitation au client qui a envoyé la demande d'invitation de session.

3. Système selon la revendication 1, dans lequel, si l'utilisateur sélectionne au moins une session parmi la session invitée et la session existante, le client PoC est conçu d'envoyer au serveur PoC un message concernant la libération de la session sélectionnée.

4. Système selon la revendication 2, dans lequel, lors de la réception d'une demande concernant l'acceptation de la demande d'invitation de session, émise par l'utilisateur, le client PoC est conçu d'envoyer au serveur PoC un message de réponse indiquant l'acceptation de la demande d'invitation de session.

5. Système selon la revendication 3, dans lequel, lors de la réception du message concernant la libération de la session sélectionnée, le serveur PoC est conçu de vérifier la session à libérer contenue dans le message et de libérer la session.

6. Système selon la revendication 4, dans lequel, lors de la réception du message de réponse indiquant l'acceptation de la demande d'invitation de session, le serveur PoC est conçu d'établir la session invitée.

7. Système selon la revendication 1, dans lequel, si le paramètre de gestion de sessions multiples est réglé sur manuel, le serveur PoC est conçu de lancer un temporisateur lié à la réception en provenance du client PoC du message concernant la libération d'une session après l'acheminement de la demande d'invitation de session au client PoC détermine que le client PoC est occupé si aucun message concernant la libération de session n'est reçu du client PoC avant l'expiration du temporisateur, et envoie un message de rejet au client qui a envoyé la demande d'invitation de session.

8. Procédé pour gérer des sessions multiples auxquelles un client PoC est en train de participer, lorsqu'une demande d'invitation à une nouvelle session est reçue pour le client PoC,
comprenant les étapes consistant à :
vérifier un paramètre de gestion de sessions multiples d'un environnement de service PoC défini par un client PoC, par un serveur PoC, lors de la réception de la demande d'invitation de session destinée au client PoC, et acheminer la demande d'invitation de session au client PoC, par le serveur PoC, si le paramètre de gestion de sessions multiples est réglé sur manuel ; et déterminer si le client PoC est en train de participer à toutes les sessions disponibles, lors de la réception de la demande d'invitation de session par le client PoC, avertir un utilisateur que le nombre de sessions auxquelles il y a participation a atteint une limite maximale, par le client PoC, si toutes les sessions disponibles sont utilisées, et sélectionner au moins une session parmi une session invitée et une session existante, par le client PoC.

9. Procédé selon la revendication 8, comprenant également les étapes consistant à, si le paramètre de gestion de sessions multiples est réglé sur automatique, déterminer que le client PoC est occupé et envoyer au client qui a envoyé la demande d'invitation de session, par le serveur PoC, un message de rejet concernant la demande d'invitation.

10. Procédé selon la revendication 8, comprenant également l'étape consistant à, si l'utilisateur sélectionne au moins une session parmi la session invitée et la session existante, envoyer un message concernant la libération de la session sélectionnée au serveur PoC, par le client PoC.

11. Procédé selon la revendication 9, comprenant également l'étape consistant à, lors de la réception d'une demande concernant l'acceptation de la demande d'invitation de session, émise par l'utilisateur, envoyer un message de réponse indiquant l'acceptation de la demande d'invitation de session au serveur PoC, par le client PoC.

12. Procédé selon la revendication 10, comprenant également l'étape consistant à, lors de la réception du message concernant la libération de la session sélectionnée, vérifier la session à libérer contenue dans le message et libérer la session, par le serveur PoC.

13. Procédé selon la revendication 11, comprenant également l'étape consistant à, lors de la réception du message de réponse indiquant l'acceptation de la demande d'invitation de session, établir la session invitée, par le serveur PoC.

14. Procédé selon la revendication 8, comprenant également l'étape consistant à, si le paramètre de gestion de sessions multiples est réglé sur manuel, lancer un temporisateur lié à la réception en provenance du client PoC d'un message concernant la libération d'une session après l'acheminement de la demande d'invitation de session au client PoC, déterminer que le client PoC est occupé si aucune message concernant la libération de session n'est reçu du client PoC avant l'expiration du temporisateur, et envoyer un message de rejet au client qui a envoyé la demande d'invitation de session, par le serveur PoC.
